(19) Europäisches Patentamt
European Patent Office
Office européen des brevets

(11) **EP 3 556 223 A1**

(12) **EUROPEAN PATENT APPLICATION**

(43) Date of publication:
**23.10.2019 Bulletin 2019/43**

(51) Int Cl.:
*A23L 7/109* (2016.01)   *B29C 47/00* (2006.01)
*B29C 47/78* (2006.01)   *A23P 30/20* (2016.01)
*A21C 3/04* (2006.01)   *A21C 11/16* (2006.01)
*A21D 2/36* (2006.01)   *A21C 1/14* (2006.01)
*B01F 15/06* (2006.01)   *B01F 15/04* (2006.01)

(21) Application number: **18168223.8**

(22) Date of filing: **19.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventors:
• SUN, Wen
5656 AE Eindhoven (NL)
• CHEN, Lisa
5656 AE Eindhoven (NL)
• KUI, Xiaoyun
5656 AE Eindhoven (NL)

(74) Representative: **de Haan, Poul Erik et al
Philips International B.V.
Philips Intellectual Property & Standards
High Tech Campus 5
5656 AE Eindhoven (NL)**

(54) **AN APPARATUS AND METHOD FOR PREPARING EXTRUDABLE FOOD ITEMS**

(57)   There is provided a method (200) for preparing an extrudable food item comprising wheat flour and non-wheat flour at an apparatus (10), which comprises a mixing unit (120) and a heating unit (130). The method comprises combining (210), using the mixing unit, the non-wheat flour with a liquid so as to form a first dough mixture; heating (220), using the heating unit, the first dough mixture; and combining (230), using the mixture unit, the wheat flour with the heated dough mixture to form a second dough mixture.

Fig. 1

**Description**

FIELD OF THE INVENTION

The present disclosure relates to an apparatus and method for preparing extrudable food items. In particular, the present disclosure relates to an apparatus and method for preparing extrudable food items comprising wheat flour and non-wheat flour.

BACKGROUND OF THE INVENTION

Many people are increasingly becoming more health-conscious and recognize that a good diet is important to health and well-being. There are many well-known popular diets that promote a reduced consumption of sugar, carbohydrates, and fats as well as a higher consumption of dietary fiber. Hence, there is a higher demand in food items that have a lower content in starch (i.e. a type of carbohydrate), in particular staple food items such as pasta and noodles.

Automatic home food mixing and extrusion appliances have been in common use for many years. Automatic pasta or noodle makers which both mix dough and extrude dough through a die have been disclosed and in use since 1970s. In general, such an appliance comprises a chamber in which flour and water are mixed, and the mixed materials in the form of a dough is fed to an extrusion unit which forces the mixed dough through a die to form pasta and/or noodles. Many of the currently available automatic home food mixing and extrusion appliances are designed based on the presumption that the food items are to be prepared using refined wheat flour, as this allows a certain parameter (e.g. firmness) of cooking texture of the food item to be easily achieved through the formation of crosslinks of hydrated proteins in the wheat flour. For example, some of these appliances may have a preset operation for making pasta that is based on a recipe mainly requiring the use of wheat flour.

However, most refined wheat flour has been stripped of the bran and germ of the wheat kernel, and thus has lost most of its fiber and many of its natural nutrients. Also, wheat flour contains high carbohydrate content (approximately around 60-70% weight content) which may be deemed undesirable for many people who follow diets requiring a reduced consumption in carbohydrate or gluten.

SUMMARY OF THE INVENTION

As noted above, there are a number of disadvantages associated with the currently available techniques for preparing extrudable food items. For example, currently available devices for home food mixing and/or extruding do not provide an option for preparing healthier alternatives to extrudable food items with a lower carbohydrate content while achieving a desirable degree of a certain parameter (e.g. firmness) of cooking texture of the extrudable food items. It would therefore be advantageous to provide an improved method and apparatus for preparing extrudable food items comprising wheat flour and non-wheat flour.

To better address one or more of the concerns mentioned earlier, in a first aspect, a method for preparing an extrudable food item at an apparatus is provided. The apparatus comprises a mixing unit and a heating unit, and the method comprises: combining, using the mixing unit, the non-wheat flour with a liquid so as to form a first dough mixture; heating, using the heating unit, the first dough mixture; and combining, using the mixture unit, the wheat flour with the heated dough mixture to form a second dough mixture.

In some embodiments, heating the first dough mixture may comprise heating, using the heating unit, the first dough mixture such that its temperature exceeds a first predetermined temperature threshold. In these embodiments, the first predetermined threshold may be 90°C. Also, in these embodiments, heating the first dough mixture comprises heating, using the heating unit, the first dough mixture such that its temperature exceeds the first predetermined temperature threshold for a predetermined time period. In some embodiments, the predetermined time period may be 5 minutes.

In some embodiments, the method may further comprise measuring a temperature of the heated dough mixture, and combining the wheat flour with heated dough mixture may comprise combining the wheat flour with the heated dough mixture when the measured temperature does not exceed a second predetermined temperature threshold. In these embodiments, the second predetermined temperature threshold may be 70°C.

In some embodiments, combining the wheat flour with the heated dough mixture may comprise combining an amount of wheat flour corresponding to an amount of non-wheat flour in the heated dough mixture. In these embodiments, the amount of wheat flour to be combined with the heated dough mixture may be determined based on a predetermined weight ratio.

In some embodiments, the apparatus further may further comprise a drive unit and a rotation shaft, and the method may further comprise forming the extrudable food item by driving, using the driving unit, the rotation shaft so as to extrude the second dough mixture.

In a second aspect, there is provided an apparatus for preparing an extrudable food item comprising wheat flour and non-wheat flour, the apparatus comprising: a chamber configured to contain ingredients for the extrudable food item; a mixing unit configured to combine the non-wheat flour with a liquid in the chamber so as to form a first dough mixture; a heating unit configured to heat the first dough mixture; and a control unit configured to control the mixing unit to combine the wheat flour with the heated dough mixture so as to form a second dough mixture.

In some embodiments, the apparatus may further comprise a sensor configured to measure the temperature of the heated dough mixture. In these embodiments, the control unit may be further configured to control the heating unit to heat the dough mixture such that its temperature exceeds a first predetermined temperature threshold.

In some embodiments, the control unit may be further configured to control the mixing unit to combine the wheat flour with the heated dough mixture when the temperature of the heated dough mixture does not exceed a second predetermined temperature threshold.

In some embodiments, the chamber may further comprise an inlet configured to allow ingredients of the extrudable food item to be added into the chamber.

In some embodiments, the apparatus may further comprise a drive unit and a rotation shaft, wherein the drive unit is configured to drive the rotation shaft to extrude the second dough mixture to form the extrudable food item.

According to the aspects and embodiments described above, the limitations of existing techniques are addressed. In particular, the above-described aspects and embodiments enable extrudable food items such as pasta and/or noodle products with a low carbohydrate content and a desired texture to be formed. The preparation of the extrudable food item (i.e. the "combi-forming technique") involves the use of both wheat and non-wheat flour and takes into account the techniques required to achieve certain desired textures of the extrudable item based on wheat and non-wheat flour. There is thus provided an improved method and apparatus for preparing an extrudable food item comprising wheat flour and non-wheat flour.

These and other aspects of the disclosure will be apparent from and elucidated with reference to the embodiment(s) described hereinafter.

BRIEF DESCRIPTION OF THE DRAWINGS

For a better understanding of the embodiments, and to show more clearly how they may be carried into effect, reference will now be made, by way of example only, to the accompanying drawings, in which:

Fig. 1 is a block diagram of an apparatus for preparing an extrudable food item according to an embodiment; and
Fig. 2 illustrates a method for preparing an extrudable food item at the apparatus of Fig. 1, according to an embodiment.

DETAILED DESCRIPTION OF EMBODIMENTS

As noted above, there is provided an improved apparatus and a method of operating the same which addresses the existing problems.

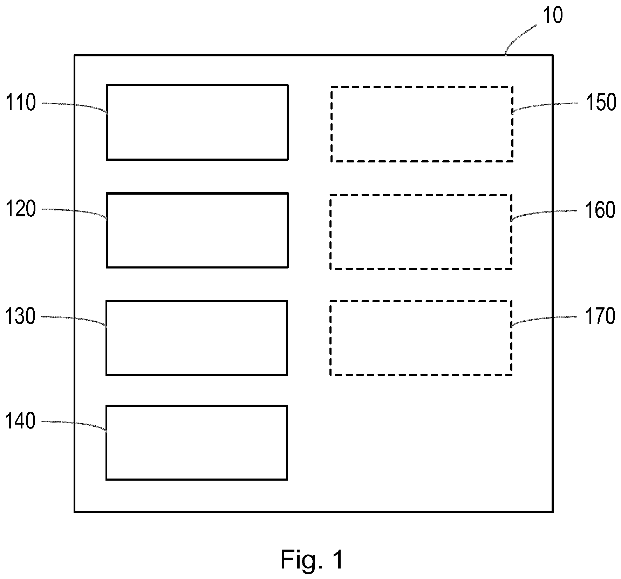

**Fig. 1** shows a block diagram of an apparatus 10 according to an embodiment, which can be used for preparing an extrudable food item. In particular, the apparatus 10 as described herein may be used for preparing an extrudable food item that is made of a combination of wheat flour and non-wheat flour. Examples of such extrudable food items include pasta and noodles.

Specifically, in some embodiments, the apparatus 10 may be used for preparing an extrudable food item in which the non-wheat flour accounts for equal to or more than 50% of the total weight of the mixed flour (i.e. the combination of wheat flour and non-wheat flour). Typically, when an extrudable food item is made of a high proportion of wheat flour, the protein content in mixed flour is sufficient for the formation of a gluten network by mixing with water and kneading the mixture into a dough so as to achieve a desired texture of the extrudable food item. However, the high portion of wheat flour means that the resultant extrudable food item contains a high carbohydrate content. In order to reduce the carbohydrate content of the resulting extrudable food item (e.g. by around 30%), instead of using a high proportion of wheat flour in the dough, a high proportion of non-wheat flour (e.g. soy flour) is used. The apparatus 10 of the present embodiment is configured so as to allow a desired texture of the prepared extrudable food item to be achieved while reducing the proportion of wheat flour used, as will be explained in more detail below.

As illustrated in Fig. 1, the apparatus 10 comprises a chamber 110, a mixing unit 120, a heating unit 130, a control unit 140, a sensor 150, a drive unit 160, and a rotation shaft 170. The chamber 110 is configured to contain ingredients for the extrudable food item, such as flour (wheat and/or non-wheat), water, oil, seasoning, etc. A user can add flour into the chamber 110 where the flour is mixed with water which can be gradually added by pouring water into the chamber either directly or through a water dispenser (not shown in the drawings). In some embodiments, the chamber 110 may further comprise an inlet (not shown in the drawing) configured to allow ingredients of the extrudable food item to be added into the chamber 110.

The mixing unit 120 is configured to combine non-wheat flour with a liquid (e.g. water) in the chamber 110 so as to form a first dough mixture. Examples of non-wheat flour include bean flour (e.g. chickpea bean flour, black bean flour, soy flour, white cowpeas flour, lupin flour, etc.), corn flour, and rice flour, etc. In some embodiments, a type of non-wheat flour comprising starch may be used, for example non-wheat cereal flour or bean flour. In some embodiments, the mixing unit 120 may comprise at least one of a stirring unit and a kneading unit, wherein the stirring unit is configured stir the ingredients contained in the chamber 110, and the kneading unit is configured to knead the ingredients contained in the chamber 110. Alternatively or additionally, in some embodiments, the mixing unit 120 may comprise a stirring and kneading unit, for example a blade unit configured to perform stirring and kneading function that can be detachably coupled to a rotation shaft powered by a motor in the apparatus 10.

The heating unit 130 is configured to heat a dough mixture contained in the chamber 110. For example, the heating unit 130 can heat the first dough mixture which comprises the non-wheat flour and the liquid. In some embodiments, the control unit 140 may be configured so as to control the heating unit 130 to heat the first dough mixture such that its temperature exceeds a first predetermined temperature threshold, and in some of these embodiments, the control unit 140 maybe configured to control the heating unit 130 to heat the first dough mixture such that its temperature exceeds the first predetermined temperature threshold for a predetermined time period. The temperature of the first dough mixture may be measured by the sensor 150, which is configured to measure a temperature of a dough mixture in the chamber 110.

In the present embodiment, the control unit 140 is further configured to control the mixing unit 120, subsequent to the heating of the first dough mixture, to mix wheat flour with the heated dough mixture to form a second dough mixture. As mentioned above, in some embodiments the mixing unit 120 may comprise a kneading unit configured to knead the ingredients contained in the chamber 110, which in this case may be the ingredients of the second dough mixture (i.e. wheat flour, non-wheat flour, liquid, and optionally other ingredients such as a seasoning). In some embodiments, the control unit 140 maybe configured to control the mixing unit to combine the wheat flour with the heated dough mixture when the temperature of the heated dough mixture does not exceed a second predetermined temperature threshold.

The control unit 140 can comprise one or more processors, processing units, multi-core processor or modules that are configured or programmed to control the apparatus 10 in the manner described herein. In particular implementations, the control unit 140 can comprise a plurality of software and/or hardware modules that are each configured to perform, or are for performing, individual or multiple steps of the method described herein.

The control unit 140 can be implemented in numerous ways, with software and/or hardware, to perform the various functions described below. The control unit 140 may comprise one or more microprocessors or digital signal processor (DSPs) that may be programmed using software or computer program code to perform the required functions and/or to control components of the control unit 140 to effect the required functions. The control unit 140 may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

In the present embodiment, the drive unit 160 is configured to drive the rotation shaft 170 to extrude the second dough mixture to form the extrudable food item. In some embodiments, an extrusion unit (e.g. a die) may be further provided at the apparatus 10. In these embodiments, the drive unit 160 may be configured to drive the rotation shaft 170 so as to force the second dough mixture through the extrusion unit to form the food item in the desired shape.

In some embodiments, the apparatus 10 may further comprise at least one user interface (not shown in the drawing). Alternative or in addition, at least one user interface may be external to (i.e. separate to or remote from) the apparatus 10. For example, at least one user interface may be part of another device. A user interface may be for use in providing a user of the apparatus 10 with information resulting from the method described herein. For example, the control unit 140 may be configured to control one or more user interfaces to render (or output or display) a status (e.g. temperature) of the ingredients in the chamber 110. Alternatively or in addition, a user interface may be configured to receive a user input. For example, a user interface may allow a user of the apparatus 10 to manually enter instructions, data, or information. In these embodiments, the control unit 140 may be configured to acquire the user input from one or more user interfaces.

A user interface may be any user interface that enables the rendering (or output or display) of information to a user of the apparatus 10. Alternatively or in addition, a user interface may be any user interface that enables a user of the apparatus 10 to provide a user input, interact with and/or control the apparatus 10. For example, the user interface may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the apparatus 10 may comprise a memory. Alternatively or in addition, one or more memories may be external to (i.e. separate to or remote from) the apparatus 10. For example, one or more memories may be part of another device. A memory can be configured to store program code that can be executed by the control unit 140 to perform the method described herein. A memory can be used to store information, data, signals and measurements acquired or made by the control unit 140 of the apparatus 10. For example, a memory may be used to store (for example, in a local file) a predetermined weight ratio on which a determination of an amount of wheat flour to be combined with the heated dough mixture may be based. The control unit 140 may be configured to control a memory to store this predetermined weight ratio.

In some embodiments, the apparatus 10 may comprise a communications interface (or circuitry) for enabling the apparatus 10 to communicate with any interfaces, memories and/or devices that are internal or external to the apparatus 10. The communications interface may communicate with any interfaces, memories and/or devices wirelessly or via a wired connection. For example, the communications interface may communicate with one or more user interfaces wirelessly or via a wired connection. Similarly, the communications interface may communicate with the one or more memories wirelessly or via a wired connection.

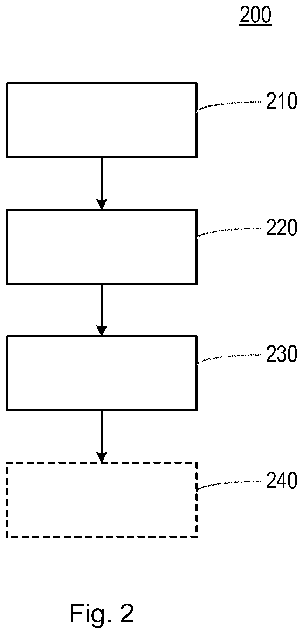

As mentioned above, the sensor 150 is configured to measure a temperature of a dough mixture in the chamber 110. In some embodiments, the sensor 150 may further comprise a weight sensor to measure an amount of ingredients in the chamber 110. Therefore, in these embodiments, the control unit 140 may be configured to perform a number of functionalities in accordance to measurements at the weight sensor. For example, as will be explain in further detail with reference to Fig. 2, in some embodiments the control unit 140 may be configured to determine an amount of wheat flour to be combined with the first dough mixture based on a measurement of the weight sensor.

In some embodiments, the apparatus 10 may not comprise one or more of: a chamber, a control unit, a sensor, a drive unit, or a rotation shaft. For example, in alternative embodiments the apparatus may not comprise a chamber and the apparatus may be configured such that it can be releasably coupled to an external working chamber into which ingredients for extrudable food items can be introduced. As another example, in alternative embodiments the apparatus may not comprise a drive unit or a rotation shaft, and the apparatus may be configured to be coupled to an external extruding device for extruding the second dough mixture.

It will be appreciated that Fig. 1 only shows the components required to illustrate an aspect of the apparatus 10 and, in a practical implementation, the apparatus 10 may comprise alternative or additional components to those shown. For example, the apparatus 10 may comprise a battery or other power supply for powering the apparatus 10 or means for connecting the apparatus 10 to a mains power supply.

**Fig. 2** illustrates a method 200 for preparing an extrudable food item comprising wheat flour and non-wheat flour at the apparatus 10, according to an embodiment. Parts of the method may be performed or under the control of the control unit 140 of the apparatus 10.

With reference to Fig. 2, at block 210, the non-wheat flour is combined with a liquid, e.g. water, so as to form a first dough mixture. In some embodiments, a type of non-wheat flour comprising starch in used.

More specifically, the non-wheat flour is mixed using the mixing unit 120 of the apparatus 10. To achieve low carbohydrate content in the resulting extrudable food item, in some embodiments, non-wheat flour of lower carbohydrate content may be used, e.g. bean flour. However, in some embodiments, to facilitate achieving a desired degree of a parameter of cooking texture of the extrudable food item, non-wheat flour of higher carbohydrate content may also be used, e.g. rice flour or tapioca flour. Examples of parameters of cooking texture of the extrudable food item include firmness, stickiness, tensile strength, breaking rate, cohesive strength, flexibility, resilience, etc.

Returning back to Fig. 2, at block 220, the first dough mixture is heated using the heating unit 130 of the apparatus 10. The heating of the first dough mixture may gelatinize the starch contained in the first dough mixture, given the presence of a sufficient amount of moisture, and hence increase the viscosity of the first dough mixture. The gelatinization also facilitates achieving the desired degree of a parameter (e.g. stickiness) of cooking texture of the extrudable food item.

In some embodiments, heating the first dough mixture at block 220 may comprise heating, using the heating unit 130, the first dough mixture such that its temperature exceeds a first predetermined temperature threshold. Furthermore, in some of these embodiments, the first predetermined temperature threshold may be 90°C. The step of heating the first dough mixture such that it exceeds a predetermined temperature threshold, such as 90°C in some particular embodiments, further helps facilitate achieving a viscous texture of the first dough mixture which is primarily made of non-wheat flour and liquid, as the higher temperature allows water absorption in the amorphous space of starch in the non-wheat flour. In some embodiments, the first predetermined temperature threshold maybe determined by the control unit 140 based on at least one of: a type of non-wheat flour used in the first dough mixture, an amount of non-wheat flour in the first dough mixture, a ratio of an amount of non-wheat flour in the first dough mixture to an amount of liquid in the first dough mixture, and a desired degree of a parameter of cooking texture of the resulting extrudable food item.

Moreover, in some of these embodiments, at block 220 heating the first dough mixture may comprise heating the first dough mixture such that its exceeds the first predetermined temperature threshold for a predetermined time period. The predetermined time period may be 5 minutes. The predetermined period may be also determined by the control unit 140 based on at least one of at least one of: a type of non-wheat flour used in the first dough mixture, an amount of non-wheat flour in the first dough mixture, a ratio of an amount of non-wheat flour in the first dough mixture to an amount of liquid in the first dough mixture, the first predetermined temperature threshold, and a desired degree of a parameter of cooking texture of the resulting extrudable food item.

Returning back to Fig. 2, at block 230, the wheat flour is combined with the heated dough mixture from block 220 using the mixing unit 120 of the apparatus 10, so as to form a second dough mixture. When the wheat flour is mixed with a liquid, e.g. water, the gluten in the wheat flour swells to form a continuous network of fine strands. This network forms the structure of the second dough mixture and makes the second dough mixture elastic and extensible. Specifically, the addition of water to the wheat flour causes hydration of the Gliadin and Glutenin proteins in the wheat flour and leads of the formation of gluten complexes in which starch is embedded. As mentioned above, in some embodiments the mixing unit 120 may comprise a kneading unit for kneading ingredients contained in the chamber 110. The kneading may cause stretching and alignment of the gluten complexes in the wheat flour, which provides opportunities to form crosslinks between the proteins in the dough mixture. The presence of the Gliadin and Glutenin proteins in the wheat flour in the second dough mixture helps give the extrudable food item a specific desired texture, in particular a firmness of the extrudable food item (e.g. whether the resulting pasta product is "al dente") and a stickiness of the extrudable food item. Moreover, kneading also incorporates air, which helps to strong disulfide bonds in the dough mixture. Therefore, the addition of the wheat flour at block 230 provides a "compensation effect" by improving at least one of a firmness and a stickiness of the heated dough mixture that may not have been achieved by the gelatinization of the starch contained in the non-wheat flour alone at block 220.

As mentioned with reference to Fig. 1, in some embodiments the apparatus 10 may further comprise a sensor 150 configured to measure the temperature of a dough mixture after it has been heated by the heated unit 130. In these embodiments, at block 230 the combining the wheat flour with heated dough mixture may comprise combining the wheat flour with the heated dough mixture when the temperature of the heated dough mixture does not exceed a second predetermined temperature threshold. In some of these embodiments, the second predetermined temperature threshold may be 70°C. In alternative embodiments, the second predetermined temperature threshold may be determined by the control unit 140 of the apparatus 10 based on at least one of: a type of non-wheat flour used in the first dough mixture, an amount of non-wheat flour in the first dough mixture, a ratio of an amount of non-wheat flour in the first dough mixture to an amount of liquid in the first dough mixture, the first predetermined temperature, and a desired degree of a parameter of cooking texture of the resulting extrudable food item.

In some embodiments, at block 230 combining the wheat flour with the heated dough mixture may comprise combining an amount of wheat flour corresponding to an amount of non-wheat flour in the heated dough mixture. The amount of corresponding wheat flour may be determined by the control unit 140 of the apparatus 10 based on an amount of the non-wheat flour in the first dough mixture. The amount of non-wheat flour in the first dough mixture may be input manually by a user via a user interface at the apparatus 10. Alternatively, as mentioned above with reference to Fig. 1, in some embodiments the apparatus 10 may further comprise a sensor 150 which comprises a weight sensor configured to measure an amount of ingredients in the chamber 110. In these embodiments, the control unit 140 maybe configured to determine an amount of wheat flour to be combined with the first dough mixture based on a measurement of the weight sensor. Moreover, in some embodiments, the amount of wheat flour to be combined with the heated dough mixture may be determined based on a predetermined weight ratio. The predetermined weight ratio may be stored in a memory of the apparatus 10, and the determination may be performed by the control unit 140 of the apparatus 10.

A table based on analysis of a plurality of pasta product samples T1 to T5 that are made of soy flour (i.e. a type of non-wheat flour) and high gluten wheat flour is provided below (table 1). In table 1, the breaking rate is used as the parameter of cooking texture of a pasta product sample, wherein the breaking rate in this case is the ratio of a weight of the pasta product sample with a length equal or less than 10 cm to a weight of the pasta product sample with a length more than 10cm, expressed as a percentage.

*Table 1 - The respective breaking rates, starch contents, and starch reduction rates of a plurality of fresh pasta sample products corresponding to the ratio of wheat flour to soy flour in the fresh pasta sample product and different mixing times of the second dough mixture, based on laboratory analysis*

| Sample | Ratio of wheat flour to soy flour | Second mixing time (minutes) | Breaking rate | Starch content | Starch reduction rate |
|--------|-----------------------------------|------------------------------|---------------|----------------|-----------------------|
| T1 | 1:1 | 3 | 8.24% | 33.7% | 36.4% |
| T2 | 1.2:1 | 3 | 6.63% | 35.0% | 34.0% |
| T3 | 1.2:1 | 6 | 14.16% | 35.0% | 34.0% |

(continued)

| Sample | Ratio of wheat flour to soy flour | Second mixing time (minutes) | Breaking rate | Starch content | Starch reduction rate |
|---|---|---|---|---|---|
| T4 | 1.4:1 | 3 | 3.73% | 35.2% | 33.7% |
| T5 | 1.4:1 | 6 | 1.88% | 35.2% | 33.7% |

As reference, the local standard Chinese requirement for the breaking rate of fresh pasta is below 15%. Hence, in some embodiments, by employing a ratio of wheat flour to soy flour (and optionally a mixing time of the second dough mixture, referred to as "second mixing time") as indicated by the table above, pasta products that are relatively heathier (i.e. lower starch content SC) than their counterparts which are made with a high proportion of wheat flour can be made while satisfying the local standard Chinese requirement relating to the breaking rate. The starch reduction rate of each of the plurality of pasta product samples are also provided in Table 1, wherein the starch reduction rate is calculated using the formula:

$$\left(1 - \frac{SC\ of\ the\ pasta\ product\ sample}{SC\ of\ a\ counterpart\ pasta\ product\ made\ with\ a\ higher\ proportion\ of\ wheat\ flour}\right) \times 100\%$$

As mentioned above with reference to Fig. 1, in some embodiments the apparatus 10 may comprise a drive unit 160 and a rotation shaft 170. In these embodiments, the method 200 may further comprise, at block 240, forming the extrudable food item by driving, using the driving unit, the rotation shaft so as to extrude the second dough mixture. However, it will be appreciated that in some embodiments the method may not comprise block 240.

There is thus provided an improved method and apparatus for preparing an extrudable food item comprising wheat flour and non-wheat flour.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that maybe linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage. Any reference signs in the claims should not be construed as limiting the scope.

**Claims**

1. A method (200) for preparing an extrudable food item comprising wheat flour and non-wheat flour at an apparatus (10), wherein the apparatus comprises a mixing unit (120) and a heating unit (130), the method comprising:

   combining (210), using the mixing unit, the non-wheat flour with a liquid so as to form a first dough mixture;
   heating (220), using the heating unit, the first dough mixture; and
   combining (230), using the mixture unit, the wheat flour with the heated dough mixture to form a second dough mixture.

2. A method (200) according to according to claim 1, wherein heating (220) the first dough mixture comprises heating, using the heating unit, the first dough mixture such that its temperature exceeds a first predetermined temperature threshold.

3. A method (200) according to claim 2, wherein the first predetermined threshold is 90°C.

4. A method (200) according to claim 2 or claim 3, wherein heating (220) the first dough mixture comprises heating, using the heating unit, the first dough mixture such that its temperature exceeds the first predetermined temperature threshold for a predetermined time period.

5. A method (200) according to claim 4, wherein the predetermined time period is 5 minutes.

6. A method (200) according to any of the preceding claims, the method further comprising measuring a temperature of the heated dough mixture, wherein combining the wheat flour with heated dough mixture comprises combining the wheat flour with the heated dough mixture when the measured temperature does not exceed a second predetermined temperature threshold.

7. A method (200) according to claim 6, wherein the second predetermined temperature threshold is 70°C.

8. A method (200) according to any of the preceding claims, wherein combining (230) the wheat flour with the heated dough mixture comprises combining an amount of wheat flour corresponding to an amount of non-wheat flour in the heated dough mixture.

9. A method (200) according to claim 8, wherein the amount of wheat flour to be combined with the heated dough mixture is determined based on a predetermined weight ratio.

10. A method (200) according to any of the preceding claims, wherein the apparatus further comprises a drive unit and a rotation shaft, wherein the method further comprises forming the extrudable food item (240) by driving, using the driving unit, the rotation shaft so as to extrude the second dough mixture.

11. An apparatus (10) for preparing an extrudable food item comprising wheat flour and non-wheat flour, the apparatus comprising:

    a chamber (110) configured to contain ingredients for the extrudable food item;
    a mixing unit (120) configured to combine the non-wheat flour with a liquid in the chamber so as to form a first dough mixture;
    a heating unit (130) configured to heat the first dough mixture; and
    a control unit (140) configured to control the mixing unit to combine the wheat flour with the heated dough mixture so as to form a second dough mixture.

12. An apparatus (10) according to claim 11, further comprising a sensor (150) configured to measure the temperature of the heated dough mixture, wherein the control unit (140) is further configured to control the heating unit (130) to heat the dough mixture such that its temperature exceeds a first predetermined temperature threshold.

**13.** An apparatus (10) according to claim 12, wherein the control unit (140) is further configured to control the mixing unit (120) to combine the wheat flour with the heated dough mixture when the temperature of the heated dough mixture does not exceed a second predetermined temperature threshold.

**14.** An apparatus (10) according to any of claims 11 to 13, wherein the chamber (110) further comprises an inlet configured to allow ingredients of the extrudable food item to be added into the chamber.

**15.** An apparatus (10) according to any of claims 11 to 14, further comprising a drive unit (160) and a rotation shaft (170), wherein the drive unit is configured to drive the rotation shaft to extrude the second dough mixture to form the extrudable food item.

Fig. 1

Fig. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/116543 A1 (KONINKL PHILIPS NV [NL]) 28 July 2016 (2016-07-28) | 11-15 | INV. A23L7/109 |
| Y | * claims 1-15 * <br> * page 5 - page 11 * | 1-15 | B29C47/00 B29C47/78 A23P30/20 |
| X | CN 106 719 988 A (JOYOUNG CO LTD) 31 May 2017 (2017-05-31) | 11-15 | A21C3/04 A21C11/16 |
| Y | * abstract * <br> * claims 1-10 * <br> * Content of the invention * <br> * Embodiments * | 1-15 | A21D2/36 A21C1/14 B01F15/06 B01F15/04 |
| X | JP 3 113873 B1 (NICHIMEN CO LTD; HOTEY SHOKURYO CO LTD; SANWA KAGAKU KENKYUSHO CO) 4 December 2000 (2000-12-04) | 1-4,8-10 | |
| Y | * abstract * <br> * claims 1-5 * <br> * paragraphs [0005] - [0023] * | 1-15 | |
| X | JP H01 148161 A (MORII SHOKUHIN KK) 9 June 1989 (1989-06-09) | 1 | |
| A | * abstract * <br> * the whole document * | 2-15 | **TECHNICAL FIELDS SEARCHED (IPC)** <br> A23L B29C |
| A | L. Popper ET AL: "23.2 Asian Wheat Noodles", The future of flour, 1 January 2006 (2006-01-01), pages 1-24, XP055499570, Retrieved from the Internet: URL:https://muehlenchemie.de/downloads-future-of-flour/FoF_Kap_23-2.pdf [retrieved on 2018-08-14] | 1-15 | A23P A21C A21D B01F |

The present search report has been drawn up for all claims

| Place of search | Date of completion of the search | Examiner |
|---|---|---|
| Munich | 15 August 2018 | Barac, Dominika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 16 8223

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2018

| Patent document cited in search report | | Publication date | Patent family member(s) | | Publication date |
|---|---|---|---|---|---|
| WO 2016116543 | A1 | 28-07-2016 | NONE | | |
| CN 106719988 | A | 31-05-2017 | NONE | | |
| JP 3113873 | B1 | 04-12-2000 | JP 3113873 B1 | | 04-12-2000 |
| | | | JP 2001128632 A | | 15-05-2001 |
| JP H01148161 | A | 09-06-1989 | NONE | | |

EPO FORM P0459

For more details about this annex : see Official Journal of the European Patent Office, No. 12/82